Europäisches Patentamt

European Patent Office

Office européen des brevets

(19)

(11) Veröffentlichungsnummer: **0 216 724 B1**

(12) **EUROPÄISCHE PATENTSCHRIFT**

(45) Veröffentlichungstag der Patentschrift: **12.06.91**

(51) Int. Cl.5: **H01H 3/30, F16H 31/00**

(21) Anmeldenummer: **86730132.7**

(22) Anmeldetag: **05.09.86**

(54) **Antriebsvorrichtung für einen Leistungsschalter mit einem Klinkenrad.**

(30) Priorität: **13.09.85 DE 3533179**

(43) Veröffentlichungstag der Anmeldung:
**01.04.87 Patentblatt 87/14**

(45) Bekanntmachung des Hinweises auf die
Patenterteilung:
**12.06.91 Patentblatt 91/24**

(84) Benannte Vertragsstaaten:
**DE FR GB IT SE**

(56) Entgegenhaltungen:
**FR-A- 1 347 857**
**GB-A- 799 665**
**US-A- 4 095 676**
**US-A- 4 167 988**

(73) Patentinhaber: **Siemens Aktiengesellschaft**
**Wittelsbacherplatz 2**
**W-8000 München 2(DE)**

(72) Erfinder: **Godesa, Ludvik, Ing.**
**Eisenacher Strasse 115**
**W-1000 Berlin 30(DE)**

**Beschreibung**

Die Erfindung betrifft eine Antriebsvorrichtung für einen Leistungsschalter mit einem Klinkenrad zum Spannen eines Energiespeichers durch schrittweise Drehung des Klinkenrades mittels einer Transportklinke, sowie mit einem Kupplungsmittel zur selbsttätigen Aushebung der Transportklinke aus der Verzahnung des Klinkenrades bei dessen Drehung im Verlauf der Entspannung des Energiespeichers mittels einer kreisbogenförmigen äußeren Arbeitsfläche.

Eine Antriebsvorrichtung dieser Art ist durch die GB-A-799 665 bekannt geworden. Die Einrichtung zur Aushebung der Transportklinke hat dabei die Aufgabe, Beschädigungen zu vermeiden, die bei der mit der Entspannung des Energiespeichers verbundenen sehr raschen Drehung des Klinkenrades sowohl an dessen Verzahnung als auch an der Transportklinke auftreten können. Schäden dieser Art begrenzen die Lebensdauer der Antriebsvorrichtung und müssen daher so gering gehalten werden, daß die in der Praxis vorgesehene Anzahl von Schaltvorgängen durchgeführt werden kann.

Die Verwendung einer besonderen Vorrichtung zur Aushebung der Transportklinke beruht darauf, daß auch eine bewußt reichliche Dimensionierung der zusammenwirkenden Teile nicht ausreicht, die schädlichen Verschleißerscheinungen zu verhindern. Die Ursache hierfür ist in der außerordentlich hohen Drehgeschwindigkeit des Klinkenrades bei der Entspannung des Energiespeichers und einer entsprechend hohen Geschwindigkeit beim Aufeinander-treffen der Zähne des Klinkenrades und der Transportklinke zu sehen. Im einzelnen beginnt dieser Vorgang mit dem Fort-schleudern der Transportklinke entgegen ihrer Andruckkraft. Die Transportklinke schwenkt dabei um ihre Lagerung und trifft gegen einen Anschlag, der die Transportklinke reflektiert. Diese trifft dann erneut auf das Klinkenrad und wird wiederum abgeschleudert. Bei der erwähnten bekannten Einrichtung zur Verhinderung des vorzeitigen Verschleißes der Antriebsvorrichtung dient als Kupplungsmittel ein auf der Achse des Klinkenrades gelagerter Schutzkörper, der durch ein Hebelgestänge bei der Freigabe des Energiespeichers zwischen die Klinken und die Verzahnung des Klinkenrades eingeschoben wird. Das Hebelgestänge sitzt auf der Schwenkachse des Klinkenhebels, der die Freigabe des Energiespeichers steuert.

Der Erfindung liegt ausgehend von einer Antriebsvorrichtung der eingangs genannten Art die Aufgabe zugrunde, die Einrichtung zur Aushebung der Transportklinke so einfach zu gestalten, daß eine Vergrößerung der Antriebsvorrichtung durch ein Hebelgestänge und weitere Teile möglichst vermieden und gesonderte Mittel für die Rückstellung des Kupplungsmittels nicht benötigt werden.

Diese Aufgabe wird gemäß der Erfindung dadurch gelöst, daß als Kupplungsmittel ein an dem Klinkenrad radial schwenkbar sowie mit einem Abstand von der Drehachse des Klinkenrades gelagerter, außen mit der Arbeitsfläche versehener einarmiger Hebel in Form eines Fliehkrafthebels vorgesehen ist und daß die unter dem Einfluß der Fliehkraft erfolgende radiale Bewegung des Fliehkrafthebels durch einen Anschlag begrenzt ist. Die Betätigung des Kupplungsmittels geschieht somit durch die Drehung des Klinkenrades aufgrund der dabei auftretenden Fliehkraft. Sobald das Klinkenrad zur Ruhe kommt, verschwindet die Fliehkraft, und die Klinken können wieder in die Verzahnung eingreifen.

Eine vorteilhaft einfache Gestaltung ist dadurch zu erzielen, daß der einarmige Hebel in einer radialen Ausnehmung des Klinkenrades angeordnet ist und das aus einem Lagerbolzen bestehende Schwenklager des fliehkrafthebels an dessen in der Drehrichtung des Klinkenrades vorderem Ende angeordnet ist.

Es ist an sich bereits bekannt (FR-A-1 347 857) das eingangs geschilderte Problem unter Zuhilfenahme der Fliehkraft zu lösen. Hierbei bleiben die Klinken jedoch ständig im Eingriff mit der Verzahnung des Klinkenrades. Durch eine zusätzliche Kupplung ist dafür gesorgt, daß das Klinkenrad nicht an der raschen Drehung bei der Entspannung des Energiespeichers teilnimmt. Die hierfür benötigte zusätzliche Kupplungseinrichtung besteht aus einem kombinierten Kupplungs- und Sperrhebel, der unter dem Einfluß der Fliehkraft eine Schwenkbewegung ausführen kann. Nach dem Spannen des Energiespeichers ist der Kupplungshebel zunächst durch eine kniehebelartige Sperrvorrichtung an der Bewegung radial nach außen gehindert, wodurch auch die Entspannung des Energiespeichers blockiert ist. Das Durchknicken des Kniehebelsystems gibt das hintere Ende des Kupplungshebels frei, wodurch dieser unter Freigabe des Energiespeichers ausweichen kann. Solange eine ausreichende Umfangsgeschwindigkeit besteht, hält die Fliehkraft den Kupplungshebel außer Eingriff mit einer zugeordneten taschenartigen Vertiefung und verhindert dadurch eine Mitnahme des Klinkenrades. Auch hierbei ist der Aufwand an Teilen erheblich größer als bei der Anordnung nach der Erfindung.

Die Erfindung wird im folgenden anhand des in den Figuren dargestellten Ausführungsbeispieles näher erläutert.

Die Figuren 1 und 2 zeigen einen Teil einer Antriebsvorrichtung eines Niederspannungs-Leistungsschalters in zwei rechtwinklig zueinander stehenden, teilweise geschnittenen Ansichten. Dabei ist die Figur 1 der Schnitt I-I in Figur 2.

Die Figur 3 zeigt als Schnitt III-III in Figur 1 eine Einzelheit im Bereich eines Klinkenrades der Antriebsvorrichtung nach den Figuren 1 und 2 teilweise im Schnitt.

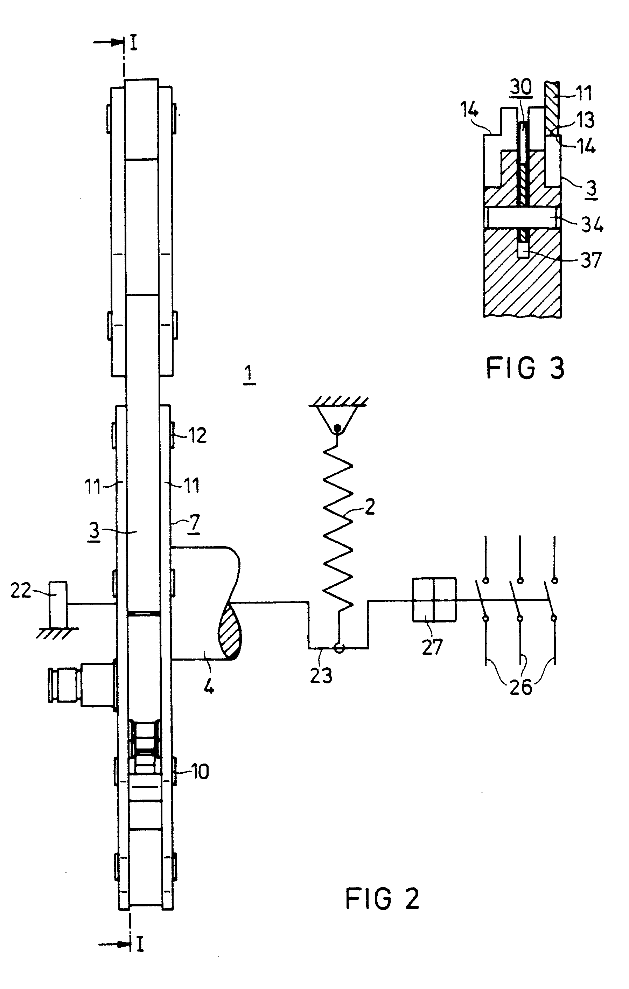

In den Figuren sind die wesentlichen Teile einer Antriebsvorrichtung für einen Niederspannungs-Leistungsschalter dargestellt. Die als Ganzes mit 1 bezeichnete Antriebsvorrichtung wirkt als Speicherantrieb und weist hierzu eine Zugfeder 2 als Energiespeicher auf. Anstelle der gezeigten einzelnen Zugfeder können auch zwei oder mehrere Zugfedern oder eine entsprechende Anordnung von Druckfedern oder ein anderer, durch eine mechanische Bewegung zu spannender Energiespeicher vorgesehen sein. Zum Spannen der Zugfeder 2 dient ein Klinkenrad 3, das auf einer in geeigneten, jedoch nicht dargestellten Lagern gelagerten Welle 4 (Figur 2) befestigt ist. Das Klinkenrad 3 ist mit Zähnen 5 versehen, die am Umfang des Klinkenrades 3 in gleichmäßiger Teilung angeordnet sind. Etwa die Hälfte des Umfanges des Klinkenrades 3 ist ohne Verzahnung ausgeführt. Der Zweck dieser Gestaltung wird noch erläutert.

Mit den Zähnen 5 des Klinkenrades 3 wirkt eine Transportklinke 6 zusammen, die in einem drehbar gelagerten Käfig 7 um einen Lagerbolzen 10 schwenkbar angeordnet ist. Der Käfig 7 besteht aus zwei Platten 11, die durch Verbindungselemente 12 in einem geeigneten Abstand gehalten und starr verbunden sind. Mit kreisförmigen Ausschnitten 13 der Platten 11 ist der Käfig 7 auf dem Klinkenrad 3 gelagert, das hierzu beidseitig der Verzahnung Absätze 14 besitzt.

Eine Biegefeder 15 stellt eine Andruckkraft bereit, durch die die Transportklinke 6 im Eingriff mit den Zähnen 5 gehalten wird.

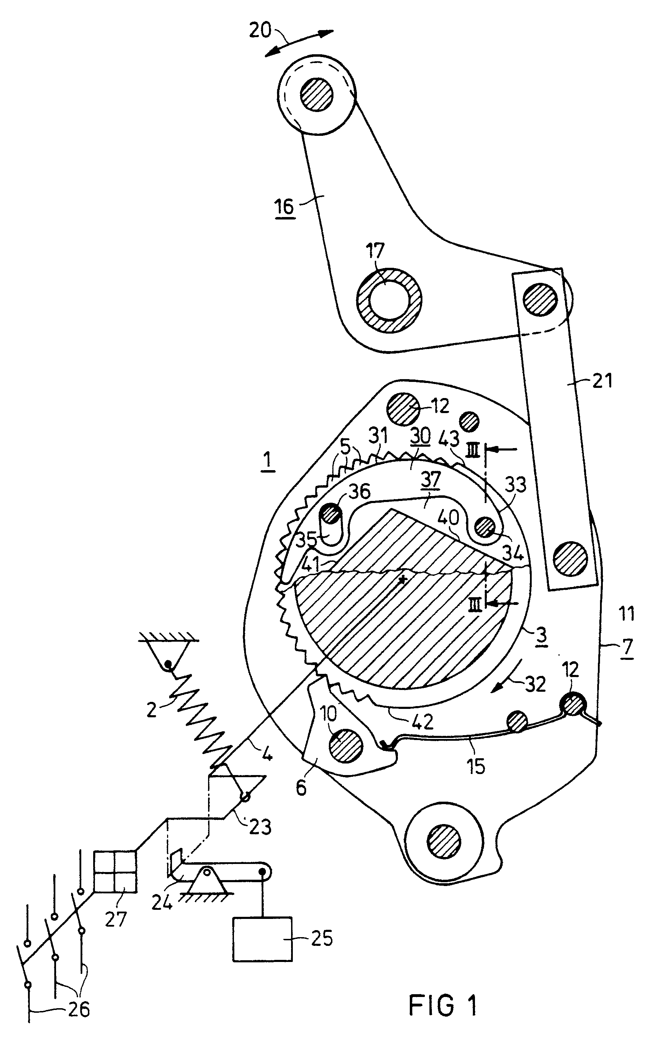

Der Käfig 7 ist gelenkig mit einem Winkelhebel 16 verbunden, der um ein ortsfestes Lager 17 schwenkbar ist und der an seinem freien Ende hin- und hergehend entsprechend dem Doppelpfeil 20 antreibbar ist. Hierzu kann in bekannter Weise ein Motor mit einem Getriebe und einem Exzenter vorgesehen sein. Die periodische Schwenkbewegung des Winkelhebels 16 wird durch eine Kuppelstange 21 auf den Käfig 7 übertragen und hierdurch in eine periodische Winkeldrehung umgesetzt. In Verbindung mit einer Rücklaufsperre 22 (Figur 2), bei der es sich in bekannter Weise um ein Richtgesperre mit einem Klinkenrad ähnlich dem Klinkenrad 3 oder um einen Klemmrollenfreilauf handeln kann, wird durch die periodische Schwenkbewegung des Winkelhebels 16 das Klinkenrad 3 schrittweise weitergeschaltet. Dabei wird die Zugfeder 2 mittels eines in den Figuren 1 und 2 schematisch gezeigten Kurbelzapfens 23 gespannt, bis die Totpunktlage bezüglich des Kraftangriffes der Zugfeder 2 an den Kurbelzapfen 23 erreicht ist und der Kurbelzapfen kurz nach der Überschreitung des Totpunktes zur Anlage an einer Sperrklinke 24 gelangt (Figur 1). Durch an sich bekannte Mittel, z. B. einen Endschalter, wird dann der Antriebsmotor stillgesetzt, der die periodische Schwenkbewegung des Winkelhebels 16 veranlaßt.

Soll der Leistungsschalter eingeschaltet werden, so wird durch einen geeigneten Hilfsantrieb, z. B. den in der Figur 2 schematisch Elektromagneten 25, die Sperrklinke 24 betätigt und hierdurch der Kurbelzapfen 23 freigegeben. Die gleichfalls schematisch gezeigten Schaltkontakte 26 des Leistungsschalters werden dann über ein Schaltschloß 27 eingeschaltet.

Von einer näheren Darstellung der Kraftübertragung von der Welle 4 zu den Schaltkontakten 25 ist abgesehen worden, da die zugehörigen Teile in verschiedenen Ausführungen allgemein bekannt sind. Es wird hierzu beispielsweise auf die US-A-3 301 984 verwiesen.

Die Entspannung der Zugfeder 2 beim Einschalten ist mit einer außerordentlich raschen Drehung des Klinkenrades 3 verbunden. Ein vorzeitiger Verschleiß der zusammenwirkenden Teile wird durch einen Fliehkrafthebel 30 vermieden, der in dem Klinkenrad 3 angeordnet ist. Der Fliehkrafthebel 30 besitzt eine äußere kreisbogenförmige Arbeitsfläche 31 als Kupplungsmittel und ist an seinem in der Drehrichtung des Klinkenrades 3 (Pfeil 32) vorderen Ende 33 auf einem mit Abstand von der Drehachse des Klinkenrades angeordneten Bolzen 34 schwenkbar gelagert. Er wirkt damit als einarmiger Hebel. Nahe seinem in Drehrichtung des Klinkenrades gesehen hinteren Ende besitzt der Fliehkrafthebel 30 ein Langloch 35 für einen an dem Klinkenrad 3 angebrachten Anschlagstift 36, der die Schwenkbewegung des Fliehkrafthebels 30 nach außen begrenzt. Wie bei der Betrachtung der Figur 1 zu erkennen ist, weist der Fliehkrafthebel 30 an seiner Innenseite eine Kontur auf, die in grober Annäherung gleichfalls einem Kreisbogen entspricht, soweit die Anordnung des Lagerbolzens 34, des Anschlagstiftes 36 sowie die geforderte Festigkeit dies zulassen. Zur Unterbringung des Fliehkrafthebels 30 an dem Klinkenrad 3 genügt somit eine Ausnehmung 37 von verhältnismäßig geringer Tiefe, die in dem gezeigten Beispiel durch zwei geradlinige Einschnitte mit den Kanten 40 und 41 gebildet ist. Die radiale Ausnehmung 37 befindet sich in der Mitte des Klinkenrades 3, wie die Figur 3 zeigt.

Wie bereits erwähnt, erstreckt sich die Verzahnung des Klinkenrades 3 nur etwa über die Hälfte des Umfanges des Klinkenrades. In der in der Figur 1 gezeigten Stellung befindet sich dabei das Klinkenrad 3 nahe der Totpunktstellung des Kurbelzapfens 23, da nur noch drei Zähne 5 bis zu dem zahnfreien Bereich 42 zurückzulegen sind. Der zahnfreie Bereich 42 kann vorgesehen werden, sofern nur eine Transportklinke 6 benötigt und das Klinkenrad nicht zugleich für den Eingriff einer weiteren Sperrklinke als Rücklaufsperre benötigt wird. Wie bereits erwähnt, ist eine gesonderte Rücklaufsperre 22 (Figur 2) vorgesehen.

Bei der Entspannung der Zugfeder 2 gleitet somit die Transportklinke 6 zunächst im wesentlichen ohne Verschleiß auf dem zahnfreien Bereich 42 des Klinkenrades 3. Im weiteren Bewegungsablauf kommt jedoch das Klinkenrad 3 nicht mit dem Endteil 43 des zahnfreien Bereiches 42 bei der Transportklinke 6 zum Stillstand, sondern dreht sich noch weiter. In welchem Maß dies geschieht, hängt davon ab, wie groß der Energieüberschuß ist; beispielsweise fällt die Weiterdrehung des Klinkenrades 3 verhältnismäßig gering aus, wenn die Schaltkontakte 26 unter starker Belastung eingeschaltet werden, während eine Entspannung der Zugfeder 2 bei bereits eingeschalteten Schaltkontakten 26 zu einer erheblich größeren Weiterdrehung des Klinkenrades 3 führt. Dementsprechend durchläuft die Transportklinke 6 einen mehr oder weniger großen Teil der Verzahnung des Klinkenrades 3. Eine Berührung der Transportklinke 6 mit den Zähnen 5 wird jedoch durch den Fliehkrafthebel 30 verhindert, der infolge der raschen Drehung des Klinkenrades 3 nach außen gedrängt wird, so daß nun die Transportklinke 6 auf der über die Zähne 5 hervortretenden Arbeitsfläche 31 des Fliehkrafthebels 30 gleitet. Sobald der Energieüberschuß aufgezehrt ist und das Klinkenrad 3 zum Stillstand kommt, verschwindet die Fliehkraft, so daß im gleichen Augenblick die Transportklinke 6 durch die Biegefeder 15 in Eingriff mit der Verzahnung der Klinkenrades 3 gebracht wird. Hierzu ist die Biegefeder 15 so bemessen, daß sie den Bewegungswiderstand des Fliehkrafthebels 30 überwinden kann.

Wie die Figur 1 zeigt, überdeckt die Arbeitsfläche 31 des Fliehkrafthebels 30 einen Winkel von etwa 120° und damit den Bereich, der maximal bei der Entspannung der Zugfeder 2 durchlaufen wird. Sofern ein Klinkenrad mit einem größeren verzahnten Teil des Umfanges oder ein am ganzen Umfang verzahntes Klinkenrad verwendet wird, kann eine unerwünschte Abnutzung der Transportklinke bzw. weiterer mit der Verzahnung in Eingriff stehender Klinken durch einen weiteren oder mehrere Fliehkrafthebel vermieden werden, die in sinngemäß der gleichen Weise wie der Fliehkrafthebel 30 ausgebildet und an dem Klinkenrad 3 angebracht sind.

**Ansprüche**

1. Antriebsvorrichtung (1) für einen Leistungsschalter, mit einem Klinkenrad (3) zum Spannen eines Energiespeichers (2) durch schrittweise Drehung des Klinkenrades (3) mittels einer Transportklinke (6), sowie mit einem eine kreisbogenförmige äußere Arbeitsfläche aufweisenden Kupplungsmittel zur selbsttätigen Aushebung der Transportklinke (6) aus der Verzahnung (5) des Klinkenrades (3) bei dessen Drehung im Verlauf der Entspannung des Energiespeichers (2), **dadurch gekennzeichnet,** daß als Kupplungsmittel ein an dem Klinkenrad (3) radial schwenkbar sowie mit einem Abstand von der Drehachse des Klinkenrades (3) gelagerter, außen mit der Arbeitsfläche (31) versehener ein-armiger Hebel in Form eines Fliehkrafthebels (30) vorgesehen ist, und daß die unter dem Einfluß der Fliehkraft erfolgende radiale Bewegung des Fliehkrafthebels (30) durch einen Anschlag (36) begrenzt ist.

2. Antriebsvorrichtung nach Anspruch 1, **dadurch gekennzeichnet,** daß der Fliehkrafthebel (30) in einer radialen Ausnehmung (37) des Klinkenrades (3) angeordnet ist und daß das aus einem Lagerbolzen (34) bestehende des Fliehkrafthebels (30) an dessen in der Drehrichtung des Klinkenrades (3) vorderem Ende (33) angeordnet ist.

**Claims**

1. Drive device (1) for a circuit breaker, having a ratchet wheel (3) for charging an energy store (2) by the step-wise rotation of the ratchet wheel (3) by means of a stepping pawl (6), and having a coupling means comprising an arcuate outer working surface for the automatic lifting of the stepping pawl (6) out of the teeth (5) of the ratchet wheel (3) as it rotates in the course of discharging of the energy store (2), characterised in that as a coupling means there is provided a single-arm lever in the form of a centrifugal force lever (30) mounted radially pivotably on the ratchet wheel (3), spaced apart from the axis of rotation of the ratchet wheel (3), and provided on the outside with the working surface (31), and in that the radial movement of the centrifugal force lever (30) produced by the effect of centrifugal force is limited by a stop (36).

2. Drive device according to claim 1, characterised in that the centrifugal force lever (30) is arranged in a radial recess (37) of the ratchet wheel (3) and in that the swivel bearing of the centrifugal force lever (30), comprising a bearing pin (34), is arranged at its front end (33) in the direction of rotation of the ratchet wheel (3).

**Revendications**

1. Dispositif d'entraînement pour un sectionneur de puissance, comportant une roue à rochet (3) servant à armer un accumulateur d'énergie (2) au moyen de la rotation pas-à-pas de la roue à rochet (3) à l'aide d'un cliquet d'entraînement (6), ainsi qu'un moyen d'accouplement comportant une surface extérieure de travail en forme d'arc de cercle servant à dégager automatiquement le cliquet d'entraînement (6) de la denture (5) de la roue à rochet (3) lors de la rotation de cette dernière pendant la détente de l'accumulateur d'énergie, caractérisé par le fait qu'il est prévu, comme moyen d'accouplement, un levier à un seul bras, qui est monté de manière à pouvoir pivoter radialement sur la roue à rochet (3) à une certaine distance de l'axe de rotation de cette dernière, qui comporte extérieurement la surface de travail (31) et qui se présente sous la forme d'un levier actionné par la force centrifuge, et que le déplacement radial, qui s'effectue sous l'action de la force centrifuge, du levier (30) actionné par la force centrifuge, est limité par une butée (36).

2. Dispositif d'entraînement suivant la revendication 1, caractérisé par le fait que le levier (30) actionné par la force centrifuge est disposé dans un évidement radial (37) de la roue à rochet (3) et que le palier pivotant, constitué par un tourillon (34), du levier (30) actionné par la force centrifuge, est disposé sur l'extrémité (33) de ce levier, qui est située en avant dans le sens de rotation de la roue à rochet (3).

FIG 1

FIG 3

FIG 2